Europäisches Patentamt

European Patent Office

Office européen des brevets

(11) Veröffentlichungsnummer: **0 291 685**

**A2**

## EUROPÄISCHE PATENTANMELDUNG

(21) Anmeldenummer: 88105763.2

(51) Int. Cl.⁴: **G06K 19/06**

(22) Anmeldetag: **12.04.88**

(30) Priorität: **18.04.87 DE 3713251**

(43) Veröffentlichungstag der Anmeldung:
**23.11.88 Patentblatt 88/47**

(84) Benannte Vertragsstaaten:
**AT BE CH DE ES FR GB GR IT LI LU NL SE**

(71) Anmelder: **Mannesmann Kienzle GmbH**
**Heinrich-Hertz-Strasse 45**
**D-7730 Villingen-Schwenningen(DE)**

(72) Erfinder: **Adams, Jürgen**
**Am Mühlweiher 1**
**D-7730 Villingen-Schwenningen(DE)**
Erfinder: **Lemke, Manfred**
**Hansjakobweg 2**
**D-7734 Brigachtal(DE)**

(54) Vorrichtung zur Übertragung und Speicherung von Energie und Informationen in einen kartenförmigen Datenträger.

(57) Es wird eine Vorrichtung zur Übertragung und Speicherung von Energie in einen kartenförmig ausgebildeten, mobilen Datenträger (1) beschrieben, der in eine schachtförmige Übertragungseinheit (2) einführbar ist.

Die Übertragungseinheit (2) ist als kapazitiv wirksame Koppelstation (3) für Energie und Informationen ausgebildet und besteht aus zwei im Abstand zueinander angeordneter Flächenelektroden (8, 9), die in Materialschichten (4, 5, 6, 7) mit hoher Dielektrizitätskonstanten eingebettet sind. Der mobile Datenträger (1) besteht ebenfalls aus zwei in paralleler Ebene zueinander angeordneten Flächenelektroden (10, 11), die nach außen mit dielektrischem Material (14, 15, 16) beschichtet sind und zwischen welchen eine mit elektronischen Bauelementen (12) bestückte Leiterfläche (13) vorgesehen ist.

Der mobile Datenträger (1) ist für Einsatzgebiete zur Datenerfassung im Kraftfahrzeug-Bereich oder im Industrieeinsatz mit rauher Umgebung besonders geeignet.

FIG.1

# Vorrichtung zur Übertragung und Speicherung von Energie und Informationen in einen kartenförmigen Datenträger

Die Erfindung betrifft eine Vorrichtung zur Übertragung und Speicherung von Energie und Informationen in einen kartenförmig ausgebildeten, mobilen Datenträger, der in eine schachtförmige Übertragungseinheit einführbar ist.

Es sind mehrere Ausbildungsformen von mobilen Datenträgern bekannt, die sich grundsätzlich in der Art der Übertragung und Speicherung von Energie und Informationen unterscheiden. Entsprechend gibt es Systeme mit Kontakten, wie z. B. die Chip-Karte (ISO-Karte) für eine serielle Datenübertragung über eine galvanische Ankopplung. Übertragungen über steckbare Kontaktmittel sind stets problematisch, da durch vielerlei Umstände, wie Verschmutzung, Beschädigung und dergl. ein fehlerhafter Datentransfer bis hin zur Betriebsstörung zwischen der Übertragungseinheit und dem Datenträger entstehen kann. Datenträger mit Kontakten sind daher nur einsatzfähig in Anwendungsbereichen, wo ein äußerst sorgfältiger Umgang und eine pflegliche Behandlung der Chip-Karten gewährleistet ist.

Es sind auch Datenübertragungssysteme bekannt für einen Datentransfer in mobile Datenträger mit Kontakten in paralleler Anordnung für eine bit-parallele und wort-serielle Übertragung der speicherbaren Daten in eine so bezeichnete memory card. Diese Ausführungsform weist aufgrund der galvanischen Ankopplung dieselben möglichen Fehlerquellen auf wie bei der seriellen Übertragung.

Es sind auch mobile Datenträger und Übertragungssysteme auf der Basis einer induktiven Kopplung bekannt, wobei eine Übertragung der Betriebsenergie und der Daten durch getrennte Koppelspulen übermittelt werden. Auch eine gemeinsame Daten- und Energieübertragung auf der Grundlage der induktiven Kopplung ist bekannt. Nachteilig hierbei ist, daß sich die Datenträger hierzu nicht in einer gekapselten Form ausbilden lassen unter Verwendung von leitenden Materialien, wie beispielsweise Stahl. Die induktive Kopplung beruht auf der Wirkungsweise elektromagnetischer Felder, nicht unproblematisch ist dabei eine enge Feldbegrenzung, die Einhaltung kleiner Toleranzen in der Positionierung von Übertragungselementen mit hohem Wirkungsgrad, das bedeutet weiter, es ist eine äußerst exakte Führung der Karte im Übertragungsschacht erforderlich.

Schließlich sind Übertragungssysteme und mobile Datenträger bekannt, die über eine galvanische Energieankopplung mit robusten Kontakten verfügen und die für die Daten-Ankopplung ein induktives Wirkungssystem anwenden.

Für alle bekannten Einrichtungen gilt gemeinsam die notwendige Voraussetzung, daß der Benutzer des Datenträgers eigenverantwortlich ist für den äußerst sorgfältigen Umgang mit dem Datenträger zur Vermeidung aller unbeabsichtigter Betriebsstörungen. Solche Störungen stellen sich bei den bekannten Einrichtungen schon ein beispielsweise durch eine Kontaktverschmutzung. Ein Datenverlust kann verursacht werden durch elektromagnetische Störungen, schließlich sind auch ursächlich für viele Fehlfunktionen mechanische Belastungen, wie Deformation oder Pressung des Datenträgers.

Aufgabe der Erfindung ist es, eine Vorrichtung zur Übertragung und Speicherung von Energie und Informationen und einen robusten, mobilen Datenträger für die Aufnahme derselben zu schaffen, die die bekannten Fehlerquellen vermeiden und einen möglichst kontaktlosen Betrieb und eine äußerst einfache und unkritische Handhabung gewährleisten.

Diese Aufgabe wird gelöst durch die im Patentanspruch angegebenen Merkmale.

Die Unteransprüche enthalten weitere Merkmale für eine vorteilhafte Weiterbildung der Erfindung.

Als ein besonderer Vorteil bei der angegebenen Lösung stellt sich die vollständige Kapselung des Datenträgers bei völlig symmetrischem Aufbau dar, die eine total unproblematische Handhabung des Datenträgers gewährleistet, indem letzterer in jeder möglichen Einschublage funktionsbereit ist. Durch eine mögliche Panzerung des Datenträgers mit einfachen Mitteln, beispielsweise durch Einbettung in zwei Halbschalen aus Stahlblech, sind manipulative Eingriffe ausgeschlossen. Es ist folglich bei einer gepanzerten Ausführung eines Datenträgers unmöglich, von außen an die Flächenelektroden zu gelangen und dort durch elektrische Kontaktgabe irgendwelche Veränderungen vorzunehmen.

Die Vorrichtung zeichnet sich aus durch ein hohes Maß an Unempfindlichkeit gegen elektromagnetische Störungseinflüsse aufgrund des schichtweisen Aufbaus und der durch die Übertragungsart bedingten Robustheit der internen Schaltung, insbesondere der Empfangs- und Sendeschaltung. Magnetische Wechselfelder werden durch Wirbelströme in den Flächenelektroden abgeschirmt. Eine weitere Verbesserung der Abschirmung bringt eine ferromagnetisch wirksame Panzerung des Datenträgers mittels zweier Halbschalen aus Stahl. Elektrische Wechselfelder in der Größenordnung von E > 200 V/cm im Luftraum sind nicht vorzufinden. Diese Feldstärke mit einer Wechselfrequenz von f > 100 kHz werden jedoch im Schacht der Koppelstation erzeugt zum Betrieb des Datenträgers. Die Empfangs- und Sendeschaltung ist jedoch schaltungsbedingt, aufgrund der Ableitung der Verschiebeströme und damit einer impliziten Spannungsbegrenzung an der Schaltung, bis zum mehrfachen des oben genannten Wertes betriebssicher.

Ein Ausführungsbeispiel wird nachfolgend anhand der Zeichnungen näher beschrieben. Es zeigt

FIGUR 1 ein schematisiertes Schnittbild eines mobilen Datenträgers im Schacht der Koppelstation,

FIGUR 2 ein Ersatzschaltbild für den Datenträger und die Übertragungseinheit,

FIGUR 3 ein schematisiertes Schnittbild eines durch zwei Halbschalen gepanzerten, mobilen Datenträgers,

FIGUR 4 ein Ersatzschaltbild des Datenträgers nach FIGUR 3 in der Koppelstation,

FIGUR 5 eine schematisierte Darstellung der Vorrichtung zur Übertragung und Speicherung von Energie und Information in räumlich getrennter Anordnung der Koppelstation und des Rechner- und Bedienermoduls,

FIGUR 6 eine schematische Darstellung einer Amplitudenmodulation für die Verknüpfung von Takt und Informationen nach dem Prinzip der Pulsmodulation.

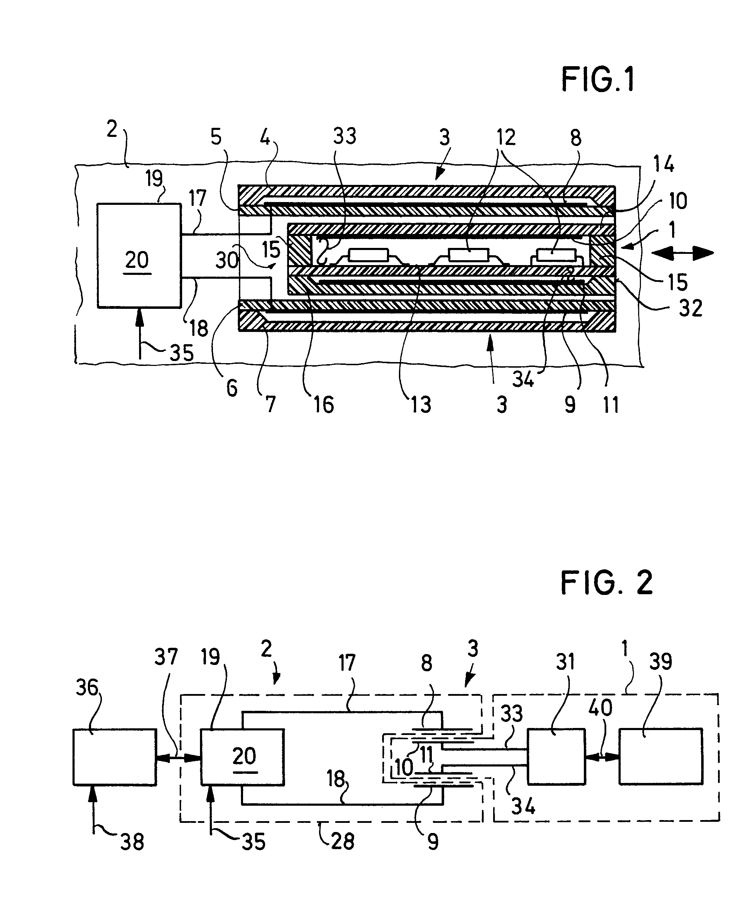

Die FIGUR 1 zeigt in schematisierter Darstellung eine Vorrichtung zur Übertragung und Speicherung von Energie und Informationen in einen kartenförmig ausgebildeten, mobilen Datenträger 1, der in eine schachtförmige Übertragungseinheit 2 einführbar ist. Die Übertragungseinheit 2 ist als kapazitiv wirksame Koppelstation 3 ausgebildet. Sie besteht aus zwei im Abstand zueinander angeordneten, in Materialschichten 4, 5, 6, 7 mit hoher relativer Dielektrizitätskonstanten eingebetteten Flächenelektroden 8, 9. Die Flächenelektroden 8, 9 bilden einen Schacht 30, der an einer Stirnseite 32 der Koppelstation 3 eine Öffnung aufweist, in die der kartenförmige Datenträger 1 einführbar ist. Die Flächenelektroden 8, 9 der Koppelstation 3 sind in symmetrischer Lage zueinander angeordnet. Der mobile Datenträger 1 besteht in gleicher Weise aus mit nach außen durch Materialschichten 14, 15, 16 bedeckten, im Abstand zueinander angeordneten, kapazitiv wirksamen Flächenelektroden 10, 11, zwischen welchen eine mit elektronischen Bauelementen 12 bestückte Leiterfläche 13 angeordnet ist, die mit den Flächenelektroden 10, 11 über Leitungen 33, 34 verbunden ist. Die äußeren Materialschichten 14, 15, 16 des Datenträgers 1 stellen isolierende Flächen mit hoher relativen Dielektrizitätskonstanten $\epsilon_r$ dar. Die Flächenelektroden 10, 11 sind - bezogen auf die äußere Form des Datenträgers 1 - in symmetrischer Lage zueinander angeordnet. Diese Maßnahme verleiht dem Datenträger 1 die Eigenschaft, daß er unabhängig von einer vorgegebenen Gebrauchslage, also auch seitenvertauscht, in die schachtförmige Übertragungseinheit 2 einführbar ist und eine uneingeschränkte Funktionsfähigkeit gewährleistet.

Wie in FIGUREN 1 und 2 angezeigt ist, sind die Flächenelektroden 8 und 9 der Koppelstation 3 über Leitungen 17 und 18 mit einer Treiberschaltung 19 verbunden, die der Bereitstellung einer Betriebswechselspannung dient, die ihrerseits die Erzeugung von Verschiebeströmen in den Flächenelektroden 8, 9, 10, 11 bewirkt. Dabei dienen die unterschiedlichen Größen der Dielektrizitätskonstanten in den einzelnen Materialschichten 5, 14 und 6, 16 zum Zwecke einer gezielten Erhöhung der Verschiebeströme in der Anordnung der Koppelstation 3 zum Datenträger 1 bei der Energieeinkopplung. Mit einem Hinweis hier auf die Wirkungsweise ergeben sich - bedingt durch den Aufbau - parasitäre Kapazitäten, die zu Verlusten beitragen. Durch die relative Dielektrizitätskonstante $\epsilon_r$ kann die Kapazität der Kondensatoren beeinflußt werden nach $C = \epsilon_0 \times \epsilon_r \times \frac{A}{d}$, wobei gilt $\epsilon_0 = 8,854 \times 10^{-12}$ As V$^{-1}$m$^{-1}$, $\epsilon_r$ = 1 .... n, A = Fläche, d: = Plattenabstand.

In FIGUR 1 bildet sich zwischen den Elektroden 10 und 11, also den Elektroden des Datenträgers 1, ein Kondensator aus, in welchem alle Elemente, vor allem die Trägerplatte der Elektronik-Leiterfläche 13 das Dielektrikum des Kondensators darstellen. Dieser Teilkondensator ist umso kleiner, also weniger wirksam, je kleiner diese relative Dielektrizitätskonstante $\epsilon_r$ ist. Demgegenüber sollte $\epsilon_r$ so groß wie möglich sein für die Materialschichten, die sich zwischen den Elektroden 10 bzw. 11 und 8 bzw. 9 zur Energie- und Informationseinkopplung befinden.

Die Verschiebeströme werden verursacht durch eine Wechselspannung mit hoher Amplitude oder mit hoher Frequenz, die durch die Treiberschaltung 19 bereitgestellt wird. In der Treiberschaltung 19 sind Schaltungsmittel 20 vorgesehen, die ein weitgehend konstantes Stromverhalten des Verschiebestromes während einer Halbphase der antreibenden Betriebswechselspannung gewährleisten.

Bei der Energieeinkopplung ist es zweckmäßig, kontinuierlich Leistung anzubieten, so daß für die Zeitbereiche, in denen keine Leistung zur Verfügung steht (z. B. Phasenübergänge der Wechselspannung/des Wechselstroms, abgelaufene Differenziervorgänge) die Energiespeicher (sog. Pufferkondensatoren) so klein wie möglich sind. Versucht man, die Energie-Einkopplung mittels einer Rechteckwechselspannung, so entstehen aufgrund der Einkoppel-Kondensatoren Differenziervorgänge mit zeitlich kurzem, aber hohem Leistungsangebot und gegebenenfalls relativ langen Pausen, bezogen auf eine Phase der antreibenden Wechselspannung. Das kurzzeitig hohe Leistungsangebot führt durch den in der Regel hohen Stromanteil auch zu hohen Verlusten. Ein kontinuierliches Leistungsangebot kann erreicht werden durch eine geeignete Kurvenform der Ansteuerspannung oder durch Kompensation des Blindwiderstands $\frac{1}{\omega C} \sim \omega L$,

also der Serienschaltung einer induktiven Komponente. Die induktive Komponente kann durch geeignete Transformator-Koppelschaltungen oder durch Serienschaltung einer Spule erreicht werden.

Eine gleichzeitige Einkopplung von Energie und Informationen in einen Datenträger 1 wird beispielsweise erreicht mittels Frequenzmodulation der Wechselspannung aus der Treiberschaltung 19, wobei die Wechselspannung für die Einkopplung von Energie eine höhere und unabhängige Frequenz besitzt bezogen auf eine mittlere Frequenz für die Einkopplung von Informationen.

Vorzugsweise wird hier eine Frequenzmodulation der antreibenden Betriebswechselspannung aus der Treiberschaltung 19 nach einem RZ-Code angewandt, (Return to Zero, Gleichspannungsanteil - freie Codierung).

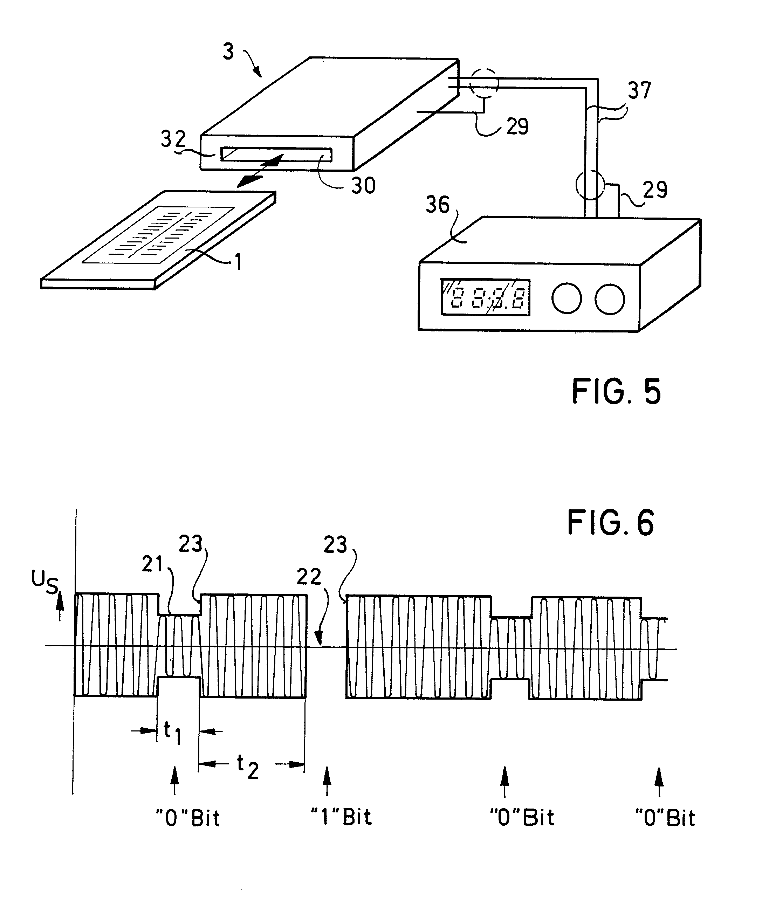

Bei der gleichzeitigen Einkopplung von Energie und Informationen über eine Amplitudenmodulation der Energie einkoppelnden Betriebswechselspannung aus der Treiberschaltung 19 werden Modulationstiefen von 10 % bis 100 % zur Bit-Codierung benutzt in der Art, daß eine über 10 % bis 30 % ausdehnbare Modulation Bit-Werte von z. B. "0" und eine von 40 % bis 100 % ausdehnbare Modulation Bit-Werte von z. B. "1" darstellen. Bei dieser Modulation ist eine Verknüpfung von Takt und Informationen durchführbar, dergestalt daß eine Absenkung 21 der Amplitude von 100 % auf 70 % für eine Zeit $t_1$ (siehe FIGUR 6) den Beginn eines "0"-Bits, bei einer Absenkung 22 der Amplitude auf über 70 % hinaus einen Bit-Wert "1" und die volle Amplitude der Betriebsspannung aus der Treiberschaltung 19 für eine Zeit $t_2$ die Bit-Grenze 23 darstellt.

Mit der beschriebenen Vorrichtung nach FIGUR 1 ist eine gleichzeitige Einkopplung von Energie in den Datenträger 1 und Auskopplung von Informationen aus dem Datenträger 1 mittels Änderung der Impedanz in einer Empfangs- und Sendeschaltung 31 im Datenträger 1 durchführbar, dergestalt daß eine Bit-Information durch sich ändernde und überlagerte Ströme und/oder Spannungen von der Treiberschaltung 19 erkennbar und auswertbar ist. Die Auswertung kann erfolgen z. B. durch Erkennen der Wechselspannungs-Amplitude zwischen den Leitungen 17, 18 in den Schaltungsmitteln 20 oder durch resultierende Impedanzänderung, insbesondere der Blind-Komponenten (L, C). In einer bevorzugten Ausführung wird vorgeschlagen, den Austausch von Informationen zwischen dem Datenträger 1 und der Übertragungseinheit 2 im Halbduplex-Mode durchzuführen.

Hinsichtlich des in FIGUR 2 gezeigten Ersatzschaltbildes bleibt zu erklären: Die Übertragungseinheit 2 besteht aus der Koppelstation 3 und der Treiberschaltung 19. Die Flächenelektroden 8 und 9 erfüllen die Funktion von Koppelkondensatoren und sind über die Leitungen 17 und 18 mit der Treiberschaltung 19, 20 verbunden. Die Energieversorgung der Treiberschaltung 19, 20 erfolgt über eine Versorgungsleitung 35. Eine Signalverbindung 37 führt von der Treiberschaltung 19 in eine Rechnerlogik mit einem Bedienermodul 36. Rechnerlogik und Bedienermodul 36 werden ebenfalls über eine Versorgungsleitung 38 mit Energie versorgt.

Die Flächenelektroden 10 und 11 sind Teil der Koppelkondensatoren im Datenträger 1 und sind über die Leitungen 33 und 34 mit einer Empfangs- und Sendeschaltung 31 im Datenträger 1 verbunden. Die Empfangs- und Sendeschaltung 31 dient als Baugruppe der Bereitstellung der Betriebsenergie im Datenträger 1, der Demodulation der Informationssignale und schließlich der Modulation der Impedanz an den Flächenelektroden 8, 9 zur Daten-Ausgabe. Implementiert im mobilen Datenträger 1 ist eine Datenverarbeitungseinheit 39 mit Speicher (EEROM) und Steuerlogik, die über Signal- und Versorgungsverbindungen 40 mit der Empfangs- und Sendeschaltung 31 verbunden ist.

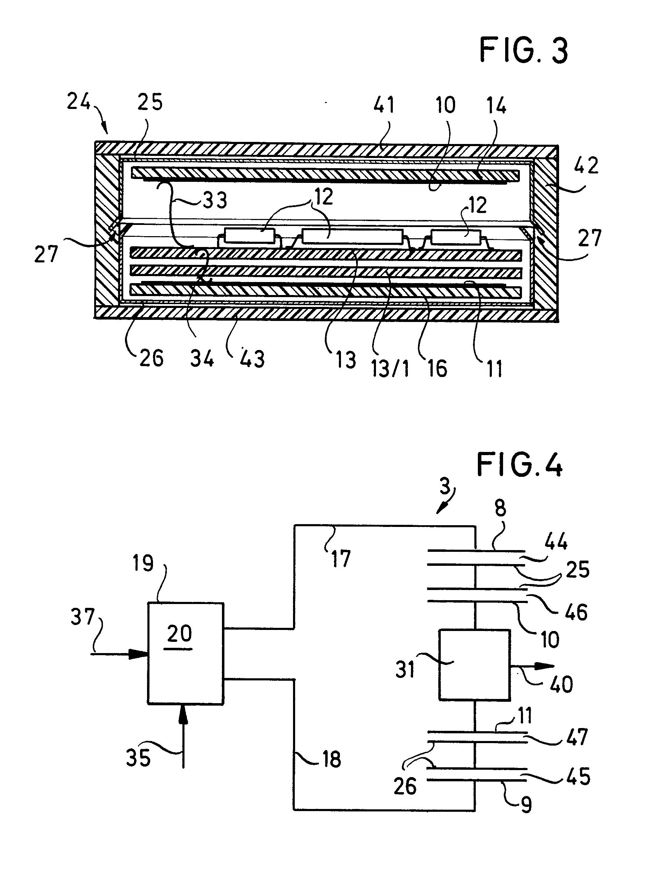

In FIGUR 3 ist eine Ausführungsform des mobilen Datenträgers 1 angezeigt, der in eine nach außen isolierte gepanzerte Kapselung 24 eingebettet ist. Die Kapselung 24 besteht aus zwei gepanzerten Halbschalen 25 und 26 aus leitendem Material, so daß die Verschiebeströme zur Ein- und Auskopplung von Energie und Informationen durch Influenz an die Flächenelektroden 10, 11 übertragbar sind. Die Halbschalen 25, 26 sind aus Stahl und sind durch eine umlaufend isolierende Trennstelle 27 galvanisch voneinander getrennt. Die äußere Umhüllung des gepanzerten, mobilen Datenträgers 1 besteht ebenfalls aus isolierenden Materialschichten 41, 42, 43. In dem durch die beiden Halbschalen 25 und 26 gebildeten Innenraum baut sich der Datenträger 1 in vergleichbarer Art wie in FIGUR 1 dargestellt auf. In der nach FIGUR 3 angegebenen Ausführung sind in dem durch die Kapselung 24 gebildeten Innenraum die Bauelemente des Datenträgers 1 vorgesehen. Von oben nach unten sind die dielektrische Materialschicht 14, die Flächenelektrode 10, die elektronischen Bauelemente 12 auf der Leiterfläche 13 gegebenenfalls auf einer zweiten Leiterfläche 13/1, die Flächenelektrode 11 und schließlich die dielektrische Materialschicht 16 angeordnet.

Ein Ersatzschaltbild des Datenträgers 1 nach FIGUR 3 in der Koppelstation 3 ist in FIGUR 4 dargestellt. Es wird danach je ein äußerer Kondensator 44, 45 gebildet zwischen den Flächenelektroden 8, 9 in der Koppelstation 3 und den leitenden Halbschalen 25 bzw. 26 und je ein innerer Kondensator 46, 47 zwischen den leitenden Halbschalen 25 bzw. 26 und den Flächenelektroden 10 bzw. 11 im Datenträger 1.

Eine vollständige Kapselung 24 des Datenträgers 1 bei einem symmetrischen Aufbau gewährleistet eine total unproblematische Handhabung des Datenträgers 1, indem letzterer in jeder möglichen Einschublage funktionsbereit ist. Aufgrund einer möglichen Panzerung des Datenträgers 1 durch die Einbettung in zwei Halbschalen 25, 26 aus Stahlblech sind manipulative Eingriffe ohne Spuren der Zerstörung ausgeschlossen. Bei der gepanzerten Ausführung des Datenträgers 1 nach FIGUR 3 ist es damit auch unmöglich, von außen an die Flächenelektroden 10 und 11 zu gelangen und dort durch elektrische Kontaktgabe irgendwelche Veränderungen vorzunehmen.

## Ansprüche

1. Vorrichtung zur Übertragung und Speicherung von Energie und Informationen in einen kartenförmig ausgebildeten, mobilen Datenträger (1), der in eine schachtförmige Übertragungseinheit (2) einführbar ist,
dadurch gekennzeichnet,
daß die Übertragungseinheit (2) als kapazitiv wirksame Koppelstation (3) für Energie und Informationen aus zwei im Abstand zueinander angeordneten, in Materialschichten (4, 5, 6, 7) mit hoher relativen Dielektrizitätskonstanten eingebetteten Flächenelektroden (8, 9) gebildet wird, zwischen welchen der mobile Datenträger (1) einführbar ist, der in gleicher Weise aus mit nach außen beschichteten (14, 15, 16), im Abstand zueinander angeordneten, kapazitiv wirksamen Flächenelektroden (10, 11) besteht, zwischen welchen eine mit elektronischen Bauelementen (12) bestückte Leiterfläche (13) angeordnet ist, die mit den Flächenelektroden (10, 11) verbunden ist.

2. Vorrichtung nach Anspruch 1,
dadurch gekennzeichnet,
daß die Funktionslage des Datenträgers (1) unabhängig ist von einer vorgegebenen Gebrauchslage und seitenvertauscht in die schachtförmige Übertragungseinheit (2) einführbar ist.

3. Vorrichtung nach Anspruch 1,
dadurch gekennzeichnet,
daß die Koppelstation (3) über Leitungen (17, 18) mit einer Treiberschaltung (19) für die Bereitstellung einer Betriebswechselspannung verbunden ist, die die Erzeugung von Verschiebeströmen in den Flächenelektroden (8, 9, 10, 11) bewirkt.

4. Vorrichtung nach Anspruch 1,
gekennzeichnet durch
eine Nutzung von unterschiedlichen Größen der Dielektrizitätskonstanten in den Matrialschichten (5, 14 und 6, 16) zum Zwecke einer steuerbaren Erhöhung der Verschiebeströme zwischen der Koppelstation (3) und dem Datenträger (1) zur Energieeinkopplung in den Datenträger (1).

5. Vorrichtung nach Anspruch 1,
gekennzeichnet durch
eine gleichzeitige Einkopplung von Energie und Informationen in einen Datenträger (1) mittels Frequenzmodulation der Wechselspannung aus der Treiberschaltung (19), wobei die Wechselspannung für die Einkopplung von Energie eine höhere und unabhängige Frequenz besitzt bezogen auf eine mittlere Frequenz für die Einkopplung von Informationen.

6. Vorrichtung nach Anspruch 1,
gekennzeichnet durch
die gleichzeitige Einkopplung von Energie und Informationen über eine Amplitudenmodulation der energieeinkoppelnden Betriebswechselspannung aus der Treiberschaltung (19), wobei Modulationstiefen von 10 % bis 100 % zur Bit-Codierung benutzt werden, dergestalt daß eine über 10 % bis 30 % ausdehnbare Modulation Bit-Werte von "0" bzw. "1" und eine von 40 % bis 100 % ausdehnbare Modulation Bit-Werte von "1" bzw. "0" darstellen.

7. Vorrichtung nach Anspruch 1 ,
gekennzeichnet durch
eine Amplitudenmodulation für die Verknüpfung von Takt und Informationen nach dem Prinzip der Pulsmodulation, dergestalt daß eine Absenkung (21) der Amplitude von 100 % auf 70 % für eine Zeit $t_1$ den Beginn eines "0"Bits, bei Absenkung (22) der Amplitude auf über 70 % einen Bit-Wert "1" und die volle Amplitude der Betriebsspannung aus der Treiberschaltung (19) für eine Zeit $t_2$ die Bit-Grenze (23) darstellt.

8. Vorrichtung nach Anspruch 1,
gekennzeichnet durch
eine gleichzeitige Einkopplung von Energie in den Datenträger (1) und Auskopplung von Informationen aus dem Datenträger (1) mittels Änderung der Impedanz in einer Empfangs- und Sendeschaltung (31) im Datenträger (1), dergestalt daß eine Bit-Information durch sich ändernde und überlagerte Ströme und/oder Spannungen von der Treiberschaltung (19) erkennbar und auswertbar ist.

9. Vorrichtung nach Anspruch 1,
dadurch gekennzeichnet,
daß der mobile Datenträger (1) in eine gepanzerte

**0 291 685**

Kapselung (24) eingebettet ist, die aus zwei gepanzerten Halbschalen (25, 26) aus leitendem Material besteht, dergestalt daß die Verschiebeströme zur Ein- und Auskopplung von Energie und Informationen durch Influenz an die Flächenelektroden (10, 11) übertragbar sind.

10. Vorrichtung nach Anspruch 1,
dadurch gekennzeichnet,
daß die Koppelstation (3) als räumlich von einem Rechner- und Bedienermodul abgesetzte Baueinheit ausgebildet ist und vorzugsweise nur aus den Flächenelektroden (8, 9) für die Energie- und Informationenkopplung, aus einem äußeren Gehäuse (28), aus einem Material mit niedriger Dielektrizitätskonstanten und aus einer Abschirmung (29) zur Reduzierung einer HF-Abstrahlung besteht.

# FIG.1

# FIG. 2

FIG. 3

FIG. 4

FIG. 5

FIG. 6